# EUROPÄISCHE PATENTSCHRIFT

(11) **EP 0 332 054 B1**
(45) Veröffentlichungstag und Bekanntmachung des Hinweises auf die Patenterteilung: **09.02.1994**
(21) Anmeldenummer: 89103683.2
(22) Anmeldetag: 02.03.1989
(51) Int. Cl.: H04B 17/00

(54) **Verfahren zum Übertragen eines digitalen Signals und einer Statusinformation**
Method for transmitting a digital signal and status information
Méthode de transmission d'un signal numérique et d'une information de statut

(30) Priorität: 09.03.1988 DE 3807760
(43) Veröffentlichungstag der Anmeldung: 13.09.1989
(73) Patentinhaber: Siemens Nixdorf Informationssysteme Aktiengesellschaft, 33102 Paderborn (DE)
(72) Erfinder: Podtschaske, Helmut, D-4790 Paderborn-Sande (DE)
(74) Vertreter: Fuchs, Franz-Josef, Dr.-Ing.

(56) Entgegenhaltungen:
- EP-A- 0 198 263
- IEEE JOURNAL OF LIGHTWAVE TECHNOLOGY, Band LT-2, Nr. 6, Dezember 1984, Seiten 987-990, IEEE, New York, US; J.-C. LACROIX: "Dialogue channels used for remote supervision and remote control of the underwater plant in submarine digital telephone links using optical fibers"

## Beschreibung

Die Erfindung betrifft ein Verfahren zum Übertragen eines digitalen Signals und einer Statusinformation von einer Sendeanordnung, in der mindestens ein Hilfssignal mit einer gegenüber der Frequenz des digitalen Signals höheren Frequenz erzeugt wird, welches unter Steuerung durch die Statusinformation einem Übertragungsglied zugeleitet und über eine Übertragungsstrecke zu einer Empfangsanordnung übertragen wird, in der das Hilfssignal zur Wiederherstellung des digitalen Signals und der Statusinformation genutzt wird. Ferner betrifft die Erfindung eine Schaltungsanordnung zur Durchführung des Verfahrens.

Aus der DE-OS 35 12 280 ist ein Verfahren dieser Art bekannt, bei dem als Hilfssignale Nadelimpulse erzeugt werden, wobei die zu übertragenden digitalen Signale anhand des Auftretens und der Polarität der Nadelimpulse wiederhergestellt werden. Das Codieren der digitalen Signale in Nadelimpulssignale unterschiedlicher Frequenz und Polarität und deren Decodierung erfordert jedoch eine aufwendige Schaltungsanordnung. Die Nadelimpulse werden aus einer Rechteckschwingung abgeleitet. Hierfür ist ebenfalls ein spezieller Schaltungsteil erforderlich.

Aus der DE-OS 35 25 105 ist ein Verfahren bekannt, bei dem zwei Datenströme mit unterschiedlicher Bit-Rate von einer Sendeeinrichtung über eine Übertragungsstrecke zu einer Empfangseinrichtung übertragen werden, wobei die beiden Datenströme im Amplituden-Multiplex-Verfahren überlagert werden. Auf diese Weise erhält man ein Übertragungssignal mit vier diskreten Zuständen, die über eine aufwendige Schwellwerterfassung und über Hoch- und Tiefpässe decodiert werden müssen. Weiterhin ist in diesem Verfahren nachteilig, daß das Übertragungssignal vier diskrete Zustände annehmen kann, wodurch bei einem Signal mit einer vorgegebenen maximalen Amplitude die Signalamplituden gegenüber binären Signalen verringert sind oder wodurch eine höhere maximale Amplitude erforderlich ist. Signale mit geringeren Signalamplituden können aufgrund der Dämpfung in der Übertragungsstrecke jedoch nur über kürzere Entfernungen ohne Zwischenverstärkung übertragen werden.

Der Erfindung liegt daher die Aufgabe zugrunde, ein Verfahren und eine Schaltungsanordnung anzugeben, welches bzw. welche mit wenig Schaltungsaufwand und daher auf kostengünstige Weise eine störunanfällige gemeinsame Übertragung eines digitalen Signals und einer Statusinformation erlaubt.

Diese Aufgabe wird durch die Merkmale der Patentansprüche 1 und 3 gelöst.

Da das digitale Signal und das Hilfssignal disjunktiv verknüpft werden, wird das Hilfssignal nur bei dem Wert Logisch 0 des Datensignals übertragen. Dem Auftreten des Hilfssignals im digitalen Übertragungssignal ist daher ein definierter Zustand, nämlich Logisch 0 des digitalen Signals zugeordnet, wodurch die Empfangsanordnung zur Wiederherstellung des digitalen Signals nur noch erkennen muß, ob die Zustandswechsel des digitalen Übertragungssignals in der Frequenz der Zustandswechsel des Hilfssignals auftreten. Dies ist mit einer einfachen und daher sehr preisgünstigen Schaltungsanordnung möglich.

Da das digitale Signal und die Statusinformation nur disjunktiv verknüpft und nicht überlagert werden, kann das digitale Datensignal nur zwei Zustände annehmen, wenn das digitale Signal ein binäres Signal ist. Ein Übertragungssignal mit zwei Zuständen, d.h. ein binäres Übertragungssignal, kann im Gegensatz zu einem Signal mit mehr als zwei diskreten Zuständen mit logischen elektronischen Bauelementen einfach und konstengünstig verarbeitet werden.

In einer Weiterbildung der Erfindung wird das Hilfssignal als Rechteckimpulssignal in der Sendeanordnung erzeugt. Dies hat den Vorteil, daß Zustandswechsel des Signals durch steile Flanken gekennzeichnet sind, wodurch sich sehr schnelle und damit zeitlich genau festgelegte Schaltzeiten realisieren lassen, und logische Schaltkreise zur Erzeugung des Übertragungssignals verwendet werden können.
In einer einfach aufgebauten Sendeanordnung zur Durchführung des erfindungsgemäßen Verfahrens werden sowohl die Statusinformation und das digitale Signal als auch die Statusinformation und das Hilfssignal konjunktiv verknüpft, wobei die beiden Verknüpfungssignale zu dem digitalen Übertragungssignal disjunktiv verknüpft werden. Diese Sendeanordnung benötigt sehr wenige Schaltungsbauteile und ist daher äußerst kostengünstig zu produzieren. Außerdem ist diese Sendeanordnung wegen ihres einfache Aufbaus wenig störanfällig.

Die Wiederherstellung des digitalen Signals und der Statusinformation in einer Empfangsanordnung wird vorteilhaft so durchgeführt, daß zur Erzeugung des digitalen Signals bei jedem Zustandswechsel des digitalen Übertragungssignals ein Zeitglied gesetzt wird, das die Abstände zwischen den Zustandswechseln des digitalen Übertragungssignals überbrückt, wenn diese in der Frequenz der Zustandswechsel des Hilfssignals auftreten. Die beiden Zustände des digitalen Signals werden, wie bereits erwähnt, durch das Auftreten bzw. Nichtauftreten des Hilfssignals im digitalen Übertragungssignal unterschieden. Diesen beiden Fällen ist jeweils einer der beiden möglichen Zustände des Zeitgliedes eindeutig zugeordnet. Das Zeitglied hat eine Einschaltzeit, die größer als der zeitliche Abstand der Zustandswechsel des Hilfssignals ist. Wenn die Zustandswechsel des digitalen Übertragungssignals in der Frequenz der Zustandswechsel des Hilfssignals auftreten, ist das Zeitglied dauerhaft gesetzt, was einem der beiden Zustände des digitalen Übertragungssignals entspricht. Tritt darauf eine andere Signalform im digitalen Übertragungssignal auf, z.B. der Wert Logisch 1 mit der Wiederholrate des digitalen Signals oder der Wert Logisch 0 als Zeichen des Übertragungsendes, so wird das Zeitglied nach der Einschaltzeit intern rückgesetzt, was dem anderen Datenzustand des digitalen Signals eindeutig zugeordnet ist.

Weiterhin wird in dieser Empfangsanordnung das binäre Übertragungssignal mit dem Rücksetzen des Zeitgliedes zur Ableitung der Statusinformation gespeichert. Die Datenübertragung wird in diesem Verfahren in der Sendeanordnung durch das Absenden eines Startimpulses begonnen, der den Wert Logisch 1 hat und dessen Impulsdauer länger als die Einschaltzeit des Zeitgliedes ist. Durch den Zustandswechsel des digitalen Übertragungssignals zu Beginn des Startimpulses wird das Zeitglied gesetzt. Es wird jedoch nach der Einschaltzeit wieder intern rückgesetzt, weil die Impulsdauer des Startbits länger als die Einschaltzeit des Zeitgliedes ist. Der Wert Logisch 1 des Startbits des digitalen Übertragungssignals wird dadurch zur Ableitung der Statusinformation gespeichert. Der Wert Logisch 0 wird erst dann zur Ableitung der Statusinformation gespeichert, wenn im digitalen Übertragungssignal der Zustand Logisch 0 länger als die Einschaltzeit des Zeitgliedes auftritt, was erst bei Ende des Sendezustandes der Fall ist.

In einer Weiterbildung der Erfindung ist in der Empfangsanordnung als Zeitglied ein retriggerbarer monostabiler Multivibrator mit einer Einschaltzeit vorgesehen, die kürzer als die Wiederholrate des digitalen Signals und länger als die Wiederholrate des Hilfssignals ist. Dieses Bauteil realisiert auf einfache Weise die Funktion des oben genannten Zeitgliedes. Die Einschaltzeit des retriggerbaren monostabilen Multivibrators sollte eher an der unteren Zeitgrenze liegen, weil einer der beiden Zustände der digitalen Signale im digitalen Übertragungssignal erst um die Einschaltzeit verzögert erkannt wird.

Um Schwierigkeiten beim Einschalten des Zeitgliedes durch die Polarität des Zustandswechsels zu vermeiden, wird in der Empfangsanordnung bei jedem Zustandswechsel des digitalen Übertragungssignals ein Einschaltimpuls für das Zeitglied dadurch erzeugt, daß das binäre Übertragungssignal auf eine Reihenschaltung von zwei bistabilen Schaltungen geführt ist, die mit einer gegenüber dem Hilfssignal höheren Frequenz getaktet werden, und daß der Eingang und der Ausgang der in der Reihenschaltung nachgeordneten bistabilen Schaltung mit den beiden Eingängen eines EXKLUSIV-ODER-Gliedes verbunden sind.

Hierdurch wird bei einem Zustandswechsel des digitalen Übertragungssignals der neue Zustand dieses Signals verzögert in den Eingang der in der Reihenschaltung nachgeordneten bistabilen Schaltung geladen, wodurch dieser neue Zustand erst mit dem nächsten Taktimpuls in deren Ausgang geladen wird. Somit liegen für die Dauer eines Taktes an den beiden Eingängen des EXKLUSIV-ODER-Gliedes zwei unterschiedliche Zustände an. Für diese Zeit wird am Ausgang des EXKLUSIV-ODER-Gliedes der Einschaltimpuls generiert.

Eine Weiterbildung der Erfindung, die sehr wenige unterschiedliche Bauteile benötigt, ist vorteilhaft dadurch gekennzeichnet, daß der retriggerbare monostabile Multivibrator aus einem mit einer gegenüber der Frequenz des Hilfssignals höheren Frequenz getakteten monostabilen Zähler und einer bistabilen Schaltung gebildet ist, und daß das Ausgangssignal des Zählers auf den Takteingang der bistabilen Schaltung geführt ist, die gesetzt wird, wenn der Zähler einen Zeitzyklus durchgezählt hat, und die zusammen mit dem Zähler von dem Einschaltimpuls zurückgesetzt wird.

Der monostabile Zähler läuft in einer Zählschleife mit einer Geschwindigkeit, die durch die Taktfrequenz des Zählers vorgegeben ist. Nach dem Durchzählen eines Zählzyklus wird der monostabile Zähler intern rückgesetzt. Hierbei wird die bistabile Schaltung gesetzt. Im rückgesetzten Zustand des retriggerbaren monostabilen Multivibrators ist demnach die bistabile Schaltung gesetzt. Beim Auftreten eines Einschaltimpulses wird der Zähler und die bistabile Schaltung rückgesetzt. Dieser Zustand entspricht dem gesetzten Zustand des retriggerbaren monostabilen Multivibrators. Tritt vor Ablauf des Zählzyklus kein neuer Einschaltimpuls auf, so wird die bistabile Schaltung durch den Zähler wieder gesetzt. Der retriggerbare monostabile Multivibrator ist wieder rückgesetzt. Treten jedoch die Einschaltimpulse in einer zeitlich kürzeren Abfolge als der Zählzyklus auf, so bleibt die bistabile Schaltung rückgesetzt bzw. der retriggerbare monostabile Multivibrator bleibt gesetzt.

Diese Anordnung benötigt Bauteile, die bereits an anderen Stellen der Sende- und Empfangsanordnung verwendet werden. Hierdurch sind nur wenige unterschiedliche Bauteile zum Aufbau der Sende- und Empfangsanordnung notwendig, wodurch die Produktionskosten dieser Schaltung erheblich gesenkt werden.

In einer Weiterbildung der Erfindung wird durch den Einschalimpuls eine bistabile Schaltungsanordnung um die Einschaltzeit verzögert gesetzt und von der bistabilen Schaltung des retriggerbaren monostabilen Multivibrators ohne Verzögerung rückgesetzt, wenn diese durch den Zähler gesetzt ist. Da die bistabile Schaltung des retriggerbaren monostabilen Multivibrators beim Ausbleiben weiterer Einschaltimpulse erst nach Ablauf eines Zählzyklus durch den Zähler gesetzt wird und auf der anderen Seite durch das Auftreten eines Schaltimpulses sofort rückgesetzt wird, ist es vorteilhaft, die bistabile Schaltungsanordnung um die Einschaltzeit verzögert durch den Einschaltimpuls zu setzen, damit die beiden Zustände des digitalen Singals die gleiche Länge haben. Ohne diese Verzögerung wäre der Zustand Logisch 0 des wiedererzeugten digitalen Signals länger als der Zustand Logisch 1.

Die Verzögerung beim Setzen der bistabilen Schaltungsanordnung kann auf einfache Weise dadurch erreicht werden, daß die bistabile Schaltungsanordnung aus einer Reihenschaltung zweier bistabiler Schaltungen mit einer vorgeordneten bistabilen Schaltung und einer nachgeordneten bistabilen Schaltung besteht, daß der Einschaltimpuls auf den Takteingang der beiden bistabilen Schaltungen der bistabilen Schaltungsanordnung geführt ist, daß deren Rücksetzeingänge mit dem Ausgang der bistabilen Schaltung des retriggerbaren monostabilen Multivibrators verbunden sind, und daß der Eingang der vorgeordneten bistabilen Schaltung auf einem festgelegten Zustand liegt.

Im gesetzten Zustand der bistabilen Schaltung des retriggerbaren monostabilen Multivibrators sind die beiden bistabilen Schaltungen der bistabilen Schaltungsanordnung rückgesetzt. Durch den ersten auftretenden Einschaltimpuls wird die bistabile Schaltung des retriggerbaren monostabilen Multivibrators rückgesetzt, wodurch die beiden bistabilen Schaltungen der bistabilen Schaltungsanordnung freigegeben werden. Durch das Auftreten des zweiten Einschaltimpulses innerhalb der Einschaltzeit des monostabilen Multivibrators wird der festgelegte Zustand am Eingang der vorgeordneten bistabilen Schaltung in den Eingang der nachgeordneten bistabilen Schaltung geladen.

Tritt nun ein dritter Einschaltimpuls auf, der gegenüber dem zweiten Einschaltimpuls einen zeitlichen Abstand hat, der geringer als die Einschaltzeit des Multivibrators ist, so wird der definierte Zustand vom Eingang der nachgeordneten bistabilen Schaltung in deren Ausgang geladen. Der Vorteil dieser Weiterbildung liegt ebenfalls in einer Verwendung einfacher standardisierter Bauteile, die an mehreren Stellen der Sende- und Empfangsanordnung verwendet werden.

In einer Weiterbildung der Erfindung wird der Zustand des binären Übertragungssignals zum Erzeugen der Statusinformation beim Rücksetzen des monostabilen Zählers in den Ausgang einer bistabilen Schaltung geladen.

Die Erfindung wird im folgenden anhand der Zeichnung weiter beschrieben. Es zeigen
- Figur 1: eine Sende- und Empfangsanordnung der erfindungsgemäßen Vorrichtung und
- Figur 2: Signalverläufe an verschiedenen Punkten der Sende-und Empfangsanordnung aus Figur 1 über die Zeit.

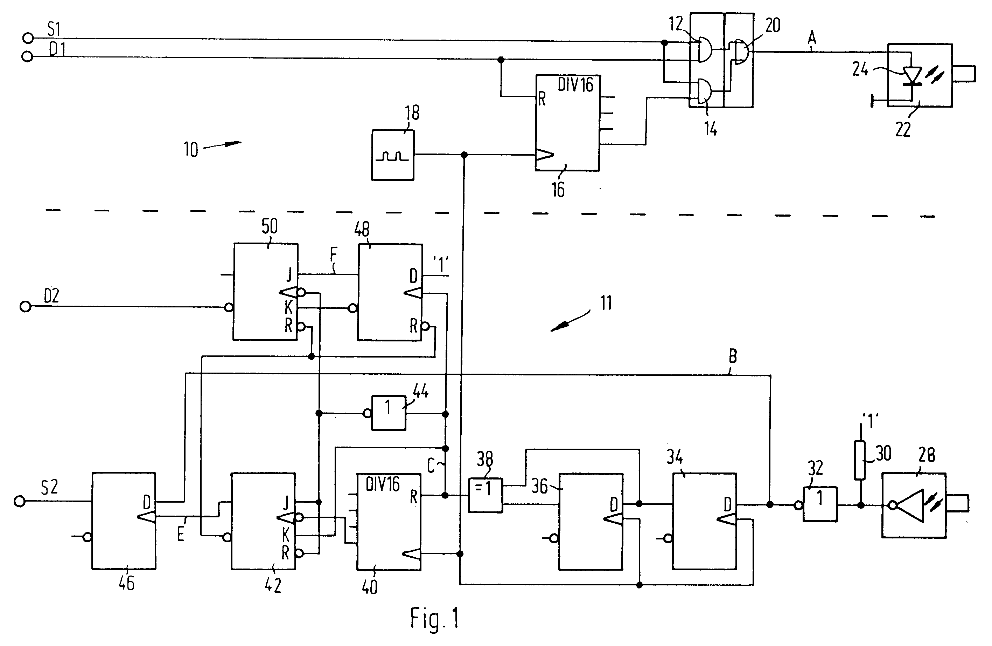

Figur 1 zeigt eine Ausführung einer erfindungsgemäßen Sende- 10 und Empfangsanordnung 11 für die Übertragung von Signalen über Lichtwellenleiter. In der Sendeanordnung 10 liegt eine Statusinformation S1 auf den ersten Eingängen zweier konjunktiver Verknüpfungsglieder 12, 14. Ein Datensignal D1 liegt auf dem zweiten Eingang des ersten konjunktiven Verknüpfungsgliedes 12 und auf dem Rücksetzeingang eines Teilers 16, dessen Ausgang mit dem zweiten Eingang des zweiten Verknüpfungsgliedes 14 verbunden ist. Der Takteingang des Teilers 16 ist mit dem Ausgang eines Rechtecksignalgenerators 18 verbunden. Die Ausgänge der beiden Verknüpfungsglieder 12 und 14 sind mit den beiden Eingängen eines disjunktiven Verknüpfungsgliedes 20 verbunden, dessen Ausgangssignal A als Übertragungssignal auf ein Übertragungsglied 22 mit einer Leuchtdiode 24 für Lichtwellenübertragung geführt ist.

Ein Datensignal D1 kann nur zum Übertragungsglied 22 gelangen, wenn die Statusinformation S1 den Zustand Logisch 1 hat. Hat zusätzlich das Datensignal D1 den Zustand Logisch 1, so wird dieser Zustand über das konjunktive Verknüpfungsglied 12 und das disjunktive Verknüpfungsglied 20 dem Übertragungsglied 22 zugeführt. Wenn die Statusinformation S1 den Zustand Logisch 1 und das Datensignal D1 den Zustand Logisch 0 haben, wird das Rechtecksignal des Rechtecksignalgenerators 18 über den Teiler 16 und das zweite Verknüpfungsglied 14 auf den Ausgang des disjunktiven Verknüpfungsgliedes 20 geführt. Das Signal A am Ausgang des disjunktiven Verknüpfungsgliedes 20 wird im Übertragungsglied 22 durch die Leuchtdiode 24 in ein Lichtsignal umgewandelt, welches z.B. über Lichtleitkabel zu einer Empfangsanordnung 11 übertragen wird.

Das Lichtsignal wird in der Empfangsanordnung 11 auf ein Rückübertragungsglied 28 geführt und in ein elektrisches Signal umgewandelt. Dieses wird über einen Widerstand 30, der mit dem Zustand Logisch 1 verbunden ist, und einen invertierenden Treiber 32 in eine dem Signal A am Ausgang des disjunktiven Verknüpfungsgliedes 20 der Sendeanordnung 10 identische Form B übertragen. Dieses Signal B ist auf den Eingang eines ersten Flip-Flops 34 geführt, dessen Ausgang mit dem Eingang eines zweiten Flip-Flops 36 verbunden ist. Die Takteingänge dieser beiden Flip-Flops 34 und 36 sind mit dem Ausgang des Rechtecksignalgenerators 18 verbunden. Der Eingang und der Ausgang des zweiten Flip-Flops 36 sind mit den beiden Eingängen eines EXKLUSIV-ODER-Gliedes 38 verbunden. Das Ausgangssignal C des EXKLUSIV-ODER-Gliedes 38 ist auf den Rücksetzeingang eines Zählers 40 geführt. Der Ausgang des Zählers 40 ist mit dem invertierenden Takteingang eines ersten JK-Flip-Flops 42 verbunden, dessen J-Eingang und invertierender Rücksetzeingang R über einen invertierenden Treiber 44 mit dem Ausgang des EXKLUSIV-ODER-Gliedes 38 verbunden sind, während der K-Eingang des ersten JK-Flip-Flops 42 direkt mit dem Ausgang des EXKLUSIV-ODER-Gliedes 38 verbunden ist. Der Ausgang E des ersten JK-Flip-Flops 42 ist mit dem Takteingang eines Flip-Flops 46 verbunden, auf dessen Dateneingang das Signal B am Ausgang des invertierenden Treibers 32 geführt ist. Der invertierende Ausgang des ersten JK-Flip-Flops 42 ist mit den invertierenden Rücksetzeingängen zweier in Reihe geschalteter Flip-Flops 48, 50 einer bistabilen Schaltungsanordnung verbunden, die ein Schieberegister bildet. Der Takteingang des in der bistabilen Schaltungsanordnung vorgeordneten Flip-Flops 48 ist direkt mit dem Ausgang des EXKLUSIV-ODER-Gliedes 38 verbunden. Das Ausgangssignal C des EXKLUSIV-ODER-Gliedes 38 ist über den invertierenden Treiber 44 auf den invertierenden Takteingang des in der bistabilen Schaltungsanordnung nachgeordneten JK-Flip-Flops 50 geführt. Der Eingang des in der bistabilen Schaltungsanordnung vorgeordneten Flip-Flops 48 liegt auf dem Zustand Logisch 1. Der Ausgang dieses Flip-Flops 48 ist mit dem J-Eingang und der invertierende Ausgang mit dem K-Eingang des in der bistabilen Schaltungsanordnung nachgeordneten JK-Flip-Flops 50 verbunden.

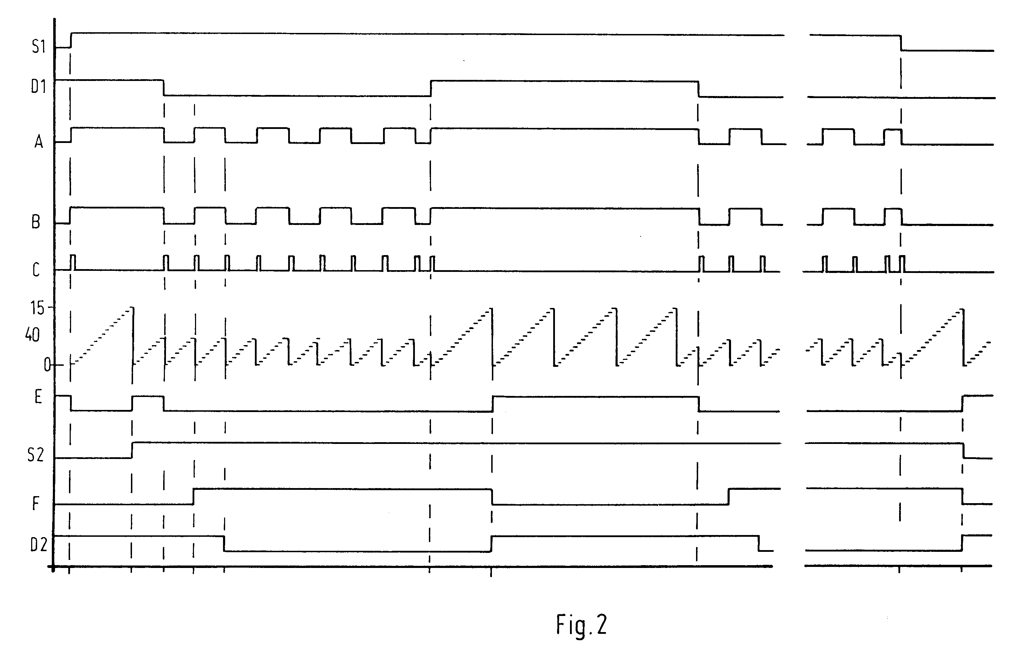

Die Funktionsweise der Empfangsanordnung 11 wird anhand der Schaltungsanordnung in Figur 1 und der Signalverläufe in Figur 2 beschrieben.

Der Beginn einer Datenübertragung ist senderseitig durch das Absenden eines Startimpulses gekennzeichnet, dessen Impulsdauer länger als ein Zählzyklus des Zählers 40 ist. Durch den Zustandswechsel des Übertragungssignals A bzw. B wird ein Einschaltimpuls C am Ausgang des EXKLUSIV-ODER-Gliedes 38 erzeugt. Durch diesen Einschaltimpuls wird der Zähler 40 und das JK-Flip-Flop 42 rückgesetzt, wobei das vorgeordnete Flip-Flop 48 und das nachgeordnete JK-Flip-Flop 50 der bistabilen Schaltungsanordnung freigegeben werden. Da die Impulsdauer des Startimpulses jedoch länger als der Zählzyklus des Zählers 40 ist, wird der Zähler 40 intern zurückgesetzt, wobei das erste JK-Flip-Flop 42 gesetzt wird. Das Flip-Flop 46 bekommt nun von dem ersten JK-Flip-Flop 42 einen Taktimpuls, wodurch der Zustand Logisch 1 des Startimpulses zur Bildung der Statusinformation S2 in den Ausgang des Flip-Flops 46 geladen wird. Durch das Setzen des ersten JK-Flip-Flops 42 werden gleichzeitig die beiden Flip-Flops 48 und 50 der bistabilen Schaltungsanordnung wieder rückgesetzt.

Wird nun der Zustand Logisch 0 des digitalen Signals übertragen, so hat das Übertragungssignal A bzw. B die Form des Hilfssignals. Beim ersten Zustandswechsel des Übertragungssignals wird der Zähler 40 und das erste JK-Flip-Flop 42 von dem Einschaltimpuls des EXKLUSIV-ODER-Gliedes 38 rückgesetzt. Die beiden Flip-Flops 48, 50 der bistabilen Schaltungsanordnung werden freigegeben. Bevor der Zähler 40 seinen Zählzyklus beenden kann, wird er abermals durch den Einschaltimpuls beim zweiten Zustandswechsel des Übertragungssignals A bzw. B gesetzt, wodurch der Wert Logisch 1 am Eingang des in der bistabilen Schaltungsanordnung vorgeordneten Flip-Flops 48 in dessen Ausgang F geladen wird. Durch den Einschaltimpuls beim dritten Zustandswechsel des Übertragungssignals wird der Wert Logisch 1 aus dem Eingang des in der bistabilen Schaltungsanordnung nachgeordneten JK-Flip-Flops 50 in dessen Ausgang zur Bildung des digitalen Signals D2 geladen. Dieses nimmt darauf den Wert Logisch 0 an. Der Zustandswechsel des digitalen Signals D1 von Logisch 1 nach Logisch 0 erfolgt beim wiedererzeugten digitalen Signal D2 um einen Zählzyklus des Zählers 40 verzögert.

Wird jetzt der Wert Logisch 1 des digitalen Signals D1 über tragen, so wird durch den Zähler 40 das JK-Flip-Flops 42 gesetzt, wodurch die beiden Flip-Flops 48, 50 der bistabilen Schaltungsanordnung rückgesetzt werden. Hierbei wechselt der Zustand des wiedererzeugten digitalen Signals D2 am invertierenden Ausgang des nachgeordneten JK-Flip-Flops 50 von Logisch 0 nach Logisch 1. Auch der Zustandswechsel des digitalen Signals D1 von Logisch 0 nach Logisch 1 erfolgt im wiedererzeugten Signal D2 um einen Zählzyklus des Zählers 40 verzögert.

Am Ende der Datenübertragung nimmt die Statusinformation S1 senderseitig den Wert Logisch 0 an, wodurch auch das Übertragungssignal A bzw. B den Wert Logisch 0 annimmt. Nach Ablauf eines Zählzyklus des Zählers 40 wird das erste JK-Flip-Flop 42 von dem Zählers 40 gesetzt, wodurch der Wert Logisch 0 des Signals B am Ausgang des invertierenden Treibers 32 zur Ableitung der Statusinformation S2 in den Ausgang des Flip-Flops 46 geladen wird.

## Patentansprüche

1. Verfahren zum Übertragen eines digitalen Signals und einer Statusinformation von einer Sendeanordnung (10), in der mindestens ein Hilfssignal mit einer gegenüber der Frequenz des digitalen Signals höheren Frequenz erzeugt wird, welches unter Steuerung durch die Statusinformation einem Übertragungsglied (22) zugeleitet und über eine Übertragungsstrecke zu einer Empfangsanordnung (11) übertragen wird, in der das Hilfssignal zur Wiederherstellung des digitalen Signals und der Statusinformation genutzt wird, dadurch **gekennzeichnet**, daß in der Sendeanordnung (10) ein digitales Übertragungssignal durch disjunktives Verknüpfen des digitalen Signals und des Hilfssignals erzeugt wird, welches dem Übertragungsglied (22) nur bei einem der beiden möglichen Zustände der Statusinformation zugeführt wird, und daß in der Empfangsanordnung (11) das digitale Signal und die Statusinforamtion durch das Auftreten von Zustandswechseln und durch den aktuellen Zustand des digitalen Übertragungssignals wiedererzeugt wird.

2. Verfahren nach Anspruch 1, dadurch **gekennzeichnet,** daß das Hilfssignal als Rechteckimpulssignal in der Sendeanordnung (10) erzeugt wird.

3. Schaltungsanordnung zum Übertragen eines digitalen Signals und einer Statusinformation von einer Sendeanordnung (10), in der mindestens ein Hilfssignal mit einer gegenüber der Frequenz des digitalen Signals höheren Frequenz erzeugt wird, welches unter Steuerung durch die Statusinformation einem Übertragungsglied (22) zugeleitet und über eine Übertragungsstrecke zu einer Empfangsanordnung (11) übertragen wird, in der das Hilfssignal zur Wiederherstellung des digitalen Signals und der Statusinformation genutzt wird, dadurch **gekennzeichnet,** daß die Sendeanordnung (10) aufgebaut ist, ein digitales Übertragungssignal durch disjunktives Verknüpfen des digitalen Signals und des Hilfssignals zu erzeugen, welches dem Übertragungsglied (22) nur bei einem der beiden möglichen Zustände der Statusinformation zugeführt wird, und daß die Empfangsanordnung (11) aufgebaut ist, das digitale Signal und die Statusinformation durch das Auftreten von Zustandswechseln und durch den aktuellen Zustand des digitalen Übertragungssignals wiederzuerzeugen.

4. Schaltungsanordnung nach Anspruch 3, dadurch gekennzeichnet, daß die Sendeanordnung (10) derart aufgebaut ist, das digitale Signal und die Statusinformation konjunktiv zu verknüpfen, die Statusinformation und das Hilfssignal konjunktiv zu verknüpfen und die beiden Verknüpfungssignale zu dem digitalen Übertragungssignal disjunktiv zu verknüpfen.

5. Schaltungsanordnung nach Anspruch 3 oder 4, dadurch **gekennzeichnet,** daß die Empfangsanordnung (11) ein Zeitglied enthält, das zur Erzeugung des digitalen Signals bei jedem Zustandswechsel des digitalen Übertragungssignals gesetzt wird und das die Abstände zwischen den Zustandswechseln des digitalen Übertragungssignals überbrückt, wenn diese in der Frequenz der Zustandswechsel des Hilfssignals auftreten, und daß ein Speicher vorgesehen ist, der das digitale Übertragungssignal mit dem Rücksetzen des Zeitgliedes zur Ableitung der Statusinformation speichert.

6. Schaltungsanordnung nach Anspruch 5, dadurch **gekennzeichnet**, daß als Zeitglied ein retriggerbarer monostabiler Multivibrator mit einer Einschaltzeit vorgesehen ist, die kürzer als die Wiederholrate des digitalen Signals und länger als die Wiederholrate des Hilfssignals ist.

7. Schaltungsanordnung nach Anspruch 5 oder 6, dadurch **gekennzeichnet**, daß bei jedem Zustandswechsel des digitalen Übertragungssignals ein Einschaltimpuls für das Zeitglied erzeugt wird, indem das digitale Übertragungssignal auf eine Reihenschaltung von zwei bistabilen Schaltungen (34, 36) geführt ist, die mit einer gegenüber dem Hilfssignal höheren Frequenz getaktet sind, und daß der Eingang und der Ausgang der in der Reihenschaltung nachgeordneten bistabilen Schaltung (36) mit den beiden Eingängen eines EXKLUSIV-ODER-Gliedes (38) verbunden sind.

8. Schaltungsanordnung nach Anspruch 6 und 7, dadurch **gekennzeichnet**, daß der retriggerbare monostabile Multivibrator aus einem mit einer gegenüber der Frequenz des Hilfssignals höheren Frequenz getakteten monostabilen Zähler (40) und einer bistabilen Schaltung (42) gebildet ist, und daß das Ausgangssignal des Zählers (40) auf den Takteingang der bistabilen Schaltung (42) geführt ist, die gesetzt wird, wenn der Zähler (40) einen Zeitzyklus durchgezählt hat und die zusammen mit dem Zähler (40) von dem Einschaltimpuls rückgesetzt wird.

9. Schaltungsanordnung nach Anspruch 8, dadurch **gekennzeichnet**, daß durch den Einschaltimpuls eine bistabile Schaltungsanordnung um eine Einschaltzeit verzögert gesetzt und von der bistabilen Schaltung (42) des retriggerbaren monostabilen Multivibrators ohne Verzögerung rückgesetzt wird, wenn diese durch den Zähler (40) gesetzt ist.

10. Schaltungsanordnung nach Anspruch 9, dadurch **gekennzeichnet**, daß die bistabile Schaltungsanordnung aus einer Reihenschaltung zweier bistabiler Schaltungen (48, 50) mit einer vorgeordneten bistabilen Schaltung (48) und einer nachgeordneten bistabilen Schaltung (50) besteht, daß der Einschaltimpuls auf den Takteingang der beiden bistabilen Schaltungen (48, 50) der bistabilen Schaltungsanordnung geführt ist, daß deren Rücksetzeingänge mit dem Ausgang der bistabilen Schaltung (42) des retriggerbaren monostabilen Multivibrators verbunden sind, und daß der Eingang der vorgeordneten bistabilen Schaltung (48) auf einem festgelegten Zustand liegt.

11. Schaltungsanordnung nach einem der Ansprüche 8 bis 10, dadurch **gekennzeichnet**, daß der Zustand des binären Übertragungssignals zum Erzeugen der Statusinformation beim Rücksetzen des monostabilen Zählers (40) in den Ausgang einer bistabilen Schaltung (46) geladen wird.

## Claims

1. Method for transmitting a digital signal and status information from a transmitting arrangement (10), in which at least one auxiliary signal with a higher frequency than the frequency of the digital signal is generated, which is forwarded to a transmission element (22) and transmitted to a receiving arrangement (11) via a transmission link under the control of the status information, in which the auxiliary signal is used to restore the digital signal and the status information, characterized in that a digital transmission signal is generated in the transmitting arrangement (10) by performing an OR operation on the digital signal and the auxiliary signal, which is supplied to the transmission element (22) only in the case of one of the two possible states of the status information, and in that the digital signal and the status information are regenerated in the receiving arrangement (11) by the occurrence of state changes and by the current state of the digital transmission signal.

2. Method according to Claim 1, characterized in that the auxiliary signal is generated as a rectangular pulse signal in the transmitting arrangement (10).

3. Circuit arrangement for transmitting a digital signal and status information from a transmitting arrangement (10), in which at least one auxiliary signal with a higher frequency than the frequency of the digital signal is generated, which is forwarded to a transmission element (22) and transmitted to a receiving arrangement (11) via a transmission link under the control of the status information, in which the auxiliary signal is used to restore the digital signal and the status information, characterized in that the transmitting arrangement (10) is designed to generate a digital transmission signal by performing an OR operation on the digital signal and the auxiliary signal, which is supplied to the transmission element (22) only in the case of one of the two possible states of the status information, and in that the receiving arrangement (11) is designed to regenerate the digital signal and the status information by the occurrence of state changes and by the current state of the digital transmission signal.

4. Circuit arrangement according to Claim 3, characterized in that the transmitting arrangement (10) is designed to perform an AND operation on the digital signal and the status information, to perform an AND operation on the status information and the auxiliary signal, and to perform an OR operation on the two logically combined signals to form the digital transmission signal.

5. Circuit arrangement according to Claim 3 or 4, characterized in that the receiving arrangement (11) contains a timer which is set to generate the digital signal each time the digital transmission signal changes state and which bridges the intervals between the state changes of the digital transmission signal when the latter occur in the frequency of the state change of the auxiliary signal, and in that a memory is provided which stores the digital transmission signal when the timer is reset to derive the status information.

6. Circuit arrangement according to Claim 5, characterized in that a retriggerable monostable multivibrator is provided as a timer, which has a turn-on time that is shorter than the repetition rate of the digital signal and longer than the repetition rate of the auxiliary signal.

7. Circuit arrangement according to Claim 5 or 6, characterized in that a turn-on pulse for the timer is generated every time the state of the digital transmission signal changes, in that the digital transmission signal is fed to a series circuit of two bistable circuits (34, 36) which are clocked at a higher frequency than the auxiliary signal, and in that the input and the output of the downstream bistable circuit (36) in the series circuit are connected to the two inputs of an EXCLUSIVE-OR element (38).

8. Circuit arrangement according to Claim 6 and 7, characterized in that the retriggerable monostable multivibrator is formed by a monostable counter (40) clocked with a higher frequency than the frequency of the auxiliary signal and a bistable circuit (42), and in that the output signal of the counter (40) is fed to the clock input of the bistable circuit (42), which is set when the counter (40) has counted through a time cycle and which is reset together with the counter (40) by the turn-on pulse.

9. Circuit arrangement according to Claim 8, characterized in that a bistable circuit arrangement is set delayed by a turn-on time by the turn-on pulse and is reset without delay by the bistable circuit (42) of the retriggerable monostable multivibrator when the latter is set by the counter (40).

10. Circuit arrangement according to Claim 9, characterized in that the bistable circuit arrangement comprises a series circuit of two bistable circuits (48, 50) with an upstream bistable circuit (48) and a downstream bistable circuit (50), in that the turn-on pulse is fed to the clock input of the two bistable circuits (48, 50) of the bistable circuit arrangement, in that their reset inputs are connected to the output of the bistable circuit (42) of the retriggerable monostable multivibrator, and in that the input of the upstream bistable circuit (48) is connected to a defined state.

11. Circuit arrangement according to one of Claims 8 to 10, characterized in that the state of the binary transmission signal is loaded into the output of a bistable circuit (46) when the monostable counter (40) is reset for generating the status information.

## Revendications

1. Procédé de transmission d'un signal numérique et d'une information d'état par un dispositif d'émission (10) dans lequel est produit au moins un signal auxiliaire, qui a une fréquence supérieure à la fréquence du signal numérique, qui est envoyé, sous la commande de l'information d'état, à un circuit de transmission (22), et qui est transmis, par l'intermédiaire d'une section de transmission, à un dispositif de réception (11), dans lequel le signal auxiliaire est utilisé pour rétablir le signal numérique et l'information d'état, caractérisé par le fait que dans le dispositif d'émission (10) est produit, par combinaison OU du signal numérique et du signal auxiliaire, un signal numérique de transmission, qui est envoyé au circuit de transmission (22) uniquement dans le cas de l'un des deux états possibles de l'information d'état, et que, dans le dispositif de réception (11), le signal numérique et l'information d'état sont rétablis par l'apparition de changements d'état et par l'état présent du signal numérique de transmission.

2. Procédé suivant la revendication 1, caractérisé par le fait que le signal auxiliaire est produit, dans le dispositif d'émission (10), sous la forme d'un signal impulsionnel rectangulaire.

3. Montage pour la transmission d'un signal numérique et d'une information d'état par un dispositif d'émission (10) dans lequel est produit au moins un signal auxiliaire, qui a une fréquence supérieure à la fréquence du signal numérique, qui est envoyé, sous la commande de l'information d'état, à un circuit de transmission (22), et qui est transmis, par l'intermédiaire d'une section de transmission, à un dispositif de réception (11), dans lequel le signal auxiliaire est utilisé pour rétablir le signal numérique et d'information d'état, caractérisé par le fait que le dispositif d'émission (10) est agencé de manière à produire, au moyen de la combinaison OU du signal numérique et du signal auxiliaire, un signal numérique de transmission, qui est envoyé au circuit de transmission (22) uniquement pour l'un des deux états possibles de l'information d'état, et que le dispositif de réception (11) est agencé de manière à reproduire le signal numérique et l'information d'état par l'apparition de changements d'état et par l'état présent du signal de transmission numérique.

4. Montage suivant la revendication 3, caractérisé par le fait que le dispositif d'émission (10) est agencé de manière à combiner selon la combinaison ET le signal numérique et l'information d'état, à combiner selon la combinaison ET l'information d'état et le signal auxiliaire, et à combiner selon la combinaison OU les deux signaux combinatoires pour former le signal de transmission numérique.

5. Montage suivant la revendication 3 ou 4, caractérisé par le fait que le dispositif de réception (11) comporte un circuit de temporisation, qui est positionné de manière à produire le signal numérique lors de chaque changement d'état du signal numérique de transmission, et qui comble les intervalles de temps entre les changements d'état du signal numérique de transmission, lorsque ces derniers apparaissent à la fréquence du changement d'état du signal auxiliaire, et qu'il est prévu une mémoire, qui mémorise le signal numérique de transmission avec retour à l'état initial du circuit de temporisation pour l'obtention de l'information d'état.

6. Montage suivant la revendication 5, caractérisé par le fait qu'il est prévu, comme circuit de temporisation un multivibrateur monostable redéclenchable possédant une durée d'activation qui est inférieure à celle de la cadence de répétition du signal numérique et qui est supérieure à celle de la cadence de répétition du signal auxiliaire.

7. Montage suivant la revendication 5 ou 6, caractérisé par le fait que lors de chaque changement d'état du signal numérique de transmission, une impulsion d'activation pour le circuit de temporisation est produite, par le fait que le signal numérique de transmission est envoyé à un circuit série formé de deux bascules bistables (34,36), qui sont commandées de façon cadencée à une fréquence supérieure à celle du signal auxiliaire, et que l'entrée et la sortie du circuit bistable (36) branché en aval dans le circuit série, sont reliées aux deux entrées d'un circuit OU-EXCLUSIF (38).

8. Montage suivant les revendications 6 et 7, caractérisé par le fait que le multivibrateur monostable redéclenchable est constitué d'un compteur monostable (40), commandé de façon cadencée à une fréquence supérieure à celle du signal auxiliaire, et d'un circuit bistable (42), et que le signal de sortie du compteur (40) est envoyé à l'entrée de cadence du circuit bistable (42) qui est positionnée lorsque le compteur (40) a compté un cycle temporel, et qui est ramené à l'état initial en même temps que le compteur (40) par l'impulsion d'activation.

9. Montage suivant la revendication 8, caractérisé par le fait qu'un montage bistable est positionné, par l'impulsion d'activation, avec un retard correspondant à une durée d'activation et est ramené immédiatement à l'état initial par le circuit bistable (42) du multivibrateur monostable redéclenchable, lorsque ce circuit est positionné par le compteur (40).

10. Montage suivant la revendication 9, caractérisé par le fait que le montage bistable est constitué par le montage en série de deux circuits bistables (48,50) comportant un circuit bistable (48) amont et un circuit bistable (50) aval, que l'impulsion d'activation est envoyée à l'entrée de cadence des deux circuits bistables (48,50) du montage bistable, que les entrées de remise à l'état initial de ce montage sont reliées à la sortie du circuit bistable (42) du multivibrateur monostable redéclenchable et que l'entrée du circuit bistable (48) amont est placée à un état fixé.

11. Montage suivant l'une des revendications 8 à 10, caractérisé par le fait que l'état du signal binaire de transmission est chargé à la sortie d'un circuit bistable (46), pour la production de l'information d'état, lors de la mise à l'état initial du compteur monostable (40).
